# EUROPEAN PATENT SPECIFICATION

(11) **EP 0 671 572 B1**
(45) Date of publication and mention of the grant of the patent: **25.11.1998**
(21) Application number: 95200453.9
(22) Date of filing: 23.02.1995
(51) Int. Cl.: F16F 9/348

(54) **Suspension strut**
Aufhängungsbein
Jambe de suspension

(30) Priority: 07.03.1994 GB 9404342; 13.04.1994 GB 9407310
(43) Date of publication of application: 13.09.1995
(73) Proprietor: DELPHI AUTOMOTIVE SYSTEMS ESPANA SA, Cadiz (ES)
(72) Inventor: Garcia, Miguel Candela, Chiclana, Cadiz (ES); Rivero, Felipe Cabezon, E-11100 San Fernando, Cadiz (ES)
(74) Representative: Denton, Michael John

(56) References cited:
- DE-B- 1 300 364
- FR-A- 1 448 714
- FR-A- 2 454 563
- FR-A- 2 500 899
- FR-E- 83 156
- GB-A- 2 228 059
- US-A- 4 624 347
- US-A- 4 819 773
- PATENT ABSTRACTS OF JAPAN vol. 8, no. 177 (M-317) (1614) 15 August 1984 & JP-A-59 069 544 (YAMAHA HATSUDOKI) 19 April 1984

## Description

The present invention relates to a suspension strut or hydraulic damper for a motor vehicle.

Known suspension struts comprise a tube; a piston sealably slidably mounted in the tube and attached to a piston rod, the piston separating a compression chamber from a rebound chamber within the tube; a compression stroke valve mounted on the piston; and a rebound stroke valve mounted on the piston. The compression stroke valve acts as a one way valve to allow flow of fluid from the compression chamber to the rebound chamber through one or more compression flow passages in the piston during the compression stroke of the suspension strut. The rebound stroke valve acts as a one way valve which allows flow of fluid from the rebound chamber to the compression chamber through one or more rebound flow passages in the piston during the rebound stroke of the suspension strut. Typically, the valves comprise a number of discs which cover the flow passages and which deflect to allow fluid flow. The deflectable discs of the compression stroke valve are typically of larger diameter than the deflectable discs of the rebound stroke valve. In these known arrangements, the flow passages extend in a direction which is substantially parallel to the longitudinal axis of the piston rod, with the rebound flow passage or passages positioned nearer the longitudinal axis of the piston rod than the compression flow passage or passages. In this arrangement, one or more apertures are formed in the deflectable discs of the compression stroke valve to allow fluid flow through the rebound flow passage or passages during a rebound stroke.

It is an object of the present invention to provide a suspension strut having improved performance characteristics over the previously known arrangements.

The present invention is particularly for a suspension strut comprising an inner tube and an outer tube (sometimes referred to as a twin tube damper) in which the piston slides in the inner tube, although the invention may also be used in a suspension strut having a single tube (sometimes referred to as a monotube damper).

US-A-4624347 discloses a suspension strut in accordance with the preamble of Claim 1.

A suspension strut in accordance with the present invention is characterised over US-A-4624347 by the features specified in the characterising portion of Claim 1.

With the present invention, a better fluid flow path is provided during the damping action of the suspension strut, providing a suspension strut with improved performance characteristics over prior known arrangements. The improvements include one or more of the following: compression damping forces being generated for lower velocity movements of the piston than previously obtainable; damping response provided for small displacements of the piston; and damping response provided for high frequency or quick piston movement changes.

The present invention will now be described, by way of example, with reference to the accompanying drawings, in which:-
Figure 1 is a schematic cross-sectional view of a suspension strut in accordance with the present invention;
Figure 2 is an end view of one end of the piston of the suspension strut of Figure 1;
Figure 3 is an end view of the other end of the piston of the suspension strut of Figure 1;
Figure 4 is a cross-sectional view taken on the line IV-IV of Figure 3;
Figure 5 is an enlarged cross-sectional view of the piston assembly of the suspension strut of Figure 1, and comprises the piston shown in Figure 4, with the compression stroke valve and the rebound stroke valve mounted thereon;
Figure 6 is an end view of the orifice disc of the rebound stroke valve shown in Figure 5; and
Figure 7 is a partial cross-sectional view of the rebound stroke valve shown in Figure 5.

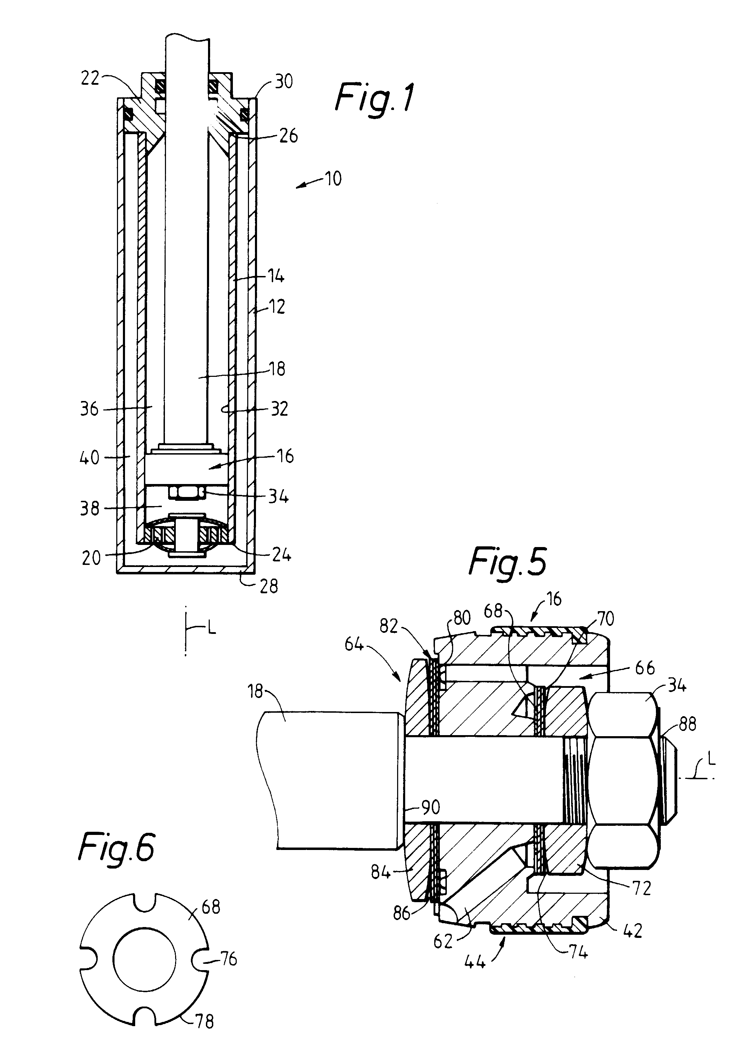

Referring to the drawings, the suspension strut 10 shown in Figure 1 is of the twin tube damper type, and comprises an outer tube 12, an inner tube 14 substantially coaxial with the outer tube on an axis L, a piston assembly 16, a piston rod 18 having a longitudinal axis on axis L, a compensation valve 20, and a rod guide 22. The piston assembly 16 will be described in greater detail below. The compensation valve 20 and the rod guide 22 may be any suitable conventional design well known to those skilled in the art, and will not be described in detail. The inner tube 14 is substantially closed at one end 24 by the compensation valve 20, and is substantially closed at the other end 26 by the rod guide 22. The outer tube 12 is closed at one end 28 by an integral formation of the outer tube walls, and is substantially closed at the other end 30 by the rod guide 22. The piston rod 18 extends through, and makes a sealing sliding fit with the rod guide 22. The piston assembly 16 makes a sealing sliding fit with the inner surface 32 of the inner tube 14. The piston rod 18 is secured to the piston assembly 16 by a nut 34 or any other suitable means. The piston assembly 16 divides the inner area of the inner tube 14 into a rebound chamber 36 and a compression chamber 38. The area between the inner tube 14 and the outer tube 12 defines a compensation chamber 40. The rebound and compression chambers 36 and 38 are substantially filled with fluid to damp reciprocating movement of the piston assembly 16 and piston rod 18 along axis L relative to the outer and inner tubes 12 and 14. The compensating chamber 40 is partly filled with fluid and acts as a reservoir for the fluid in the rebound and compression chambers 36 and 38. The suspension strut 10 is mounted in a motor vehicle (not shown) in the standard manner.

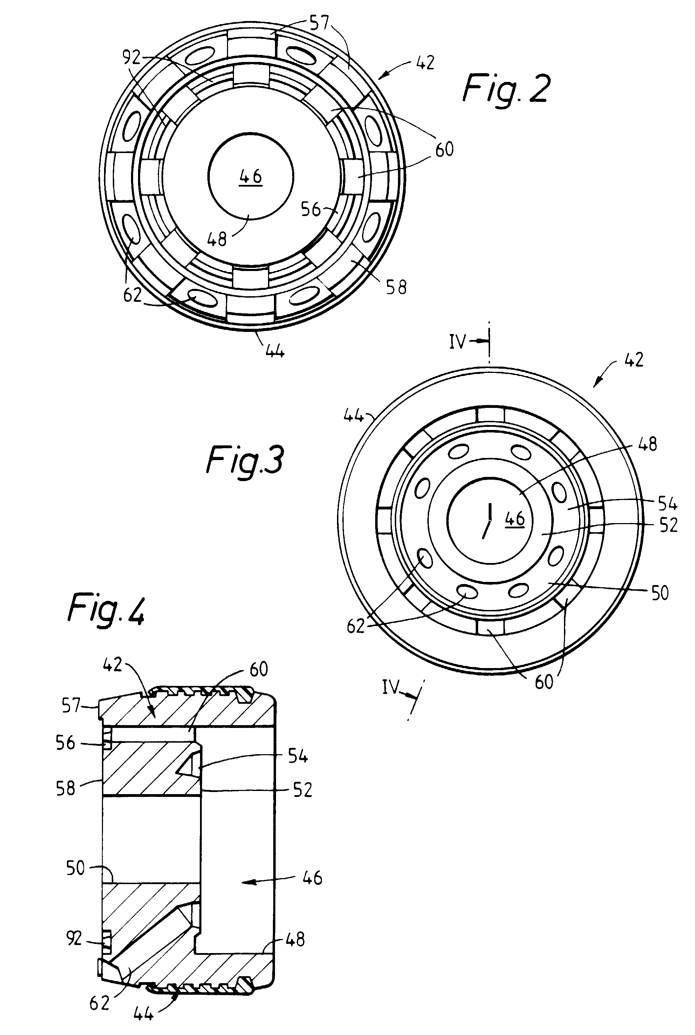

The piston assembly 16 is shown in greater detail with reference to Figures 2 to 7. Figures 2 to 4 show the piston 42 of the piston assembly 16 with an annular seal 44 made from Teflon material. The piston 42 is preferably formed from sintered steel. The annular seal 44 is preferably secured to the piston 42 by heat forming and provides a surface which makes a sealing sliding fit with the inner surface 32 of the inner tube 14. The piston 42 is substantially annular and has a through bore 46 comprising a first portion 48, a second portion 50 having a smaller diameter than the first portion, and a shoulder 52 between the first and second portions. A substantially annular channel 54 is formed in the surface of the shoulder 52. A substantially annular channel 56 is formed in an end surface 58 of the piston 42 through which the second portion 50 of the through bore 46 opens. The annular channel 56 has a larger diameter than the annular channel 54. In use, the first portion 48 of the through bore 46 opens into the compression chamber 38, and the end surface 58 of the piston 42 is directed towards the rebound chamber 36. An upstanding substantially annular ridge 57 (in the form of castellations) surrounds the end surface 58 to reduce the risk of accidental damage to the end surface during assembly of the piston assembly 16. Similarly, the first portion 48 of the through bore 46 protects the surface of the shoulder 52. These surfaces 58,52, which are contacted by discs 68,80 (described below) respectively, must remain in good condition in order for the suspension strut 10 to have the required damping characteristics.

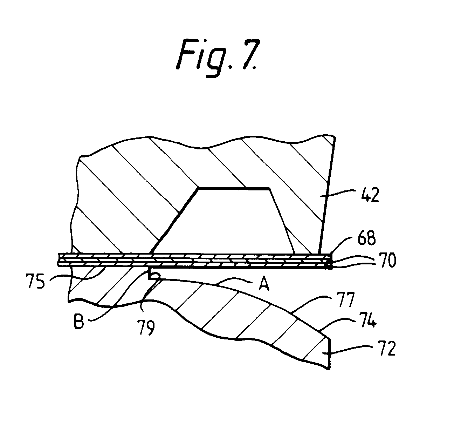

A number of passages 60 (which define compression flow passages) pass through the piston 42 from the channel 56 to the first portion 48 of the through bore 46. On assembly of the piston assembly 16 to the piston rod 18, the passages 60 extend in a direction substantially parallel to the axis L (see Figure 5). In the present embodiment, eight such passages 60 are shown, although any suitable number may be used. Further, the passages 60 are shown as having a substantially rectangular cross-section, although any suitable cross-section may be used. The number and size of the passages 60 is predetermined dependent on the required damping characteristics of the suspension strut 10.

A number of passages 62 (which define rebound flow passages) pass through the piston 42 from the channel 54 to the end surface 58. On assembly of the piston assembly 16 to the piston rod 18, the passages 62 extend at an angle to the axis L (see Figure 5) and open through the end surface 58 on a circle having a diameter greater than the diameter of the channel 56. In the present embodiment, eight such passages 62 are shown, although any suitable number may be used. Further, the passages 62 are shown as having a substantially circular cross-section, although any suitable cross-section may be used. The number and size of the passages 62 is predetermined dependent on the required damping characteristics of the suspension strut 10. With the arrangement of passages 60 and 62 as shown, and using a sintered piston 44, only the passages 62 need to be cut in the piston 44 as the passages 60 can be formed on sintering the piston.

In addition to the piston 42 and seal 44, the piston assembly 16 comprises a compression stroke valve 64 and a rebound stroke valve 66 (see Figure 5). The rebound stroke valve 66 comprises an orifice disc 68, a number of deflectable discs 70, and a retaining washer 72, all of which are substantially annular. On assembly, the orifice disc 68 engages the surface of the shoulder 52 to substantially cover the annular channel 54, and the deflectable discs 70 are positioned between the orifice disc and the retaining washer 72. The surface 74 of the retaining washer 72 adjacent the deflectable discs 70 has a flat portion 75 and a convex portion 77 with a step 79 therebetween as can be seen in Figure 7. The flat portion 75 clamps the deflectable discs 70 and orifice disc 68 to the piston 42. The convex portion 77 extends from the flat portion 75 to the outer peripheral edge of the retaining washer 72. The orifice disc 68, deflectable discs 70 and retaining washer 72 have substantially the same diameter and are sized so as not to cover the compression flow passages 60. The orifice disc 68 has a number of slots 76 formed in its outer peripheral edge 78 (Figure 6), the slots being of a size so as to form a restricted flow passage between the channel 54 and the first portion 48 of the through bore 46.

The compression stroke valve 64 comprises an orifice disc 80, a number of deflectable discs 82, and a retaining washer 84, all of which are substantially annular. On assembly, the orifice disc 80 engages the end surface 58 of the piston 42 to substantially cover the annular channel 56, and the deflectable discs 82 are positioned between the orifice disc and the retaining washer 84. The surface 86 of the retaining washer 84 adjacent the deflectable discs 82 has a flat portion and a convex portion with a step therebetween as for the retaining washer 72 described above. The orifice disc 80, deflectable discs 82 and retaining washer 84 have substantially the same diameter and are sized so as not to cover the rebound flow passages 62. The orifice disc 80 has a number of slots formed in its outer periphery (in a similar way to the orifice disc 68 shown in Figure 6), the slots being of a size so as to form a restricted flow passage between the channel 56 and the rebound chamber 36.

The piston assembly 16 is retained on the end 88 of the piston rod 18 between a shoulder 90 formed on the piston rod and the nut 34 which makes a threaded connection on the end of the piston rod, as shown in Figure 5, with the end of the piston rod passing through the second portion 50 of the through bore 46. On assembly, the retaining washer 84 engages the shoulder 90 on the piston rod 18, and the retaining washer 72 engages the nut 34. As can be seen, the compression flow passages 60 extend from a position inside the outer peripheral edge of the orifice disc 80 and deflectable discs 82 of the compression stroke valve 64 to a position outside the outer peripheral edge 78 of the orifice disc 68 and deflectable discs 70 of the rebound stroke valve 66, and the rebound flow passages 62 extend from a position inside the outer peripheral edge of the orifice disc 68 and deflectable discs 70 of the rebound stroke valve 66 to a position outside the outer peripheral edge of the orifice disc 80 and deflectable discs 82 of the compression stroke valve 64.

On compression stroke of the suspension strut 10, fluid flows from the compression chamber 38 through the compression flow passages 60 into the annular channel 56 and out through the slots in the orifice disc 80 of the compression stroke valve 64 into the rebound chamber 36. For compression strokes of larger force, the orifice disc 80 and deflectable discs 82 can deflect away from the annular channel 56 (in the same manner as described below in more detail for rebound stroke) to allow a larger flow of fluid through the compression flow passages 60. The convex portion of the surface 86 on the retaining washer 84 of the compression stroke valve 64 allows for the deflection of the deflectable discs 82, but restricts the amount of deflection so as to prevent damage to or deformation of the deflectable discs.

On rebound stroke of the suspension strut 10, fluid flows from the rebound chamber 36 through the rebound flow passages 62 into the annular channel 54 and out through the slots 76 in the orifice disc 68 of the rebound stroke valve 66 into the compression chamber 38. For rebound strokes of larger force, the orifice disc 68 and deflectable discs 70 can deflect away from the annular channel 54 to allow a larger flow of fluid through the rebound flow passages 62. When the discs 68,70 deflect, contact is initially made with the convex surface 77 (see Figure 7) at point A and then progressively along the convex surface towards the peripheral edge of the retaining washer 72. This arrangement decreases the stress produced on the discs 68,70 at point B, reducing the risk of fatigue failure of the discs. The convex portion 77 of the surface 74 on the retaining washer 72 of the rebound stroke valve 66 allows for the deflection of the deflectable discs 70, but restricts the amount of deflection so as to prevent damage to or deformation of the deflectable discs.

The presence of the annular channels 54,56 is optional but provides for better load distribution on the deflectable discs 82,70 during rebound and compression strokes respectively, and better valve seating for the rebound and compression stroke valves 66,64 respectively. A ridge 92 may be formed in the annular channel 56 between the passages 60 to reduce the risk of breakage or deformation of the orifice disc 80 and deflectable discs 82 during rebound stroke due to pressure build-up in the rebound chamber 36. A similar ridge may be formed in the annular channel 54.

The presence of one or both of the orifice discs 68,80 is optional, and fluid flow through the passages 60,62 can be controlled solely by deflection of the deflectable discs 70,82. The number and size (thickness) of the deflectable discs 70,82 is predetermined dependent on the required damping characteristics of the suspension strut 10. The through bore 46 in the piston 42 may be of substantially constant diameter, with the rebound stroke valve 66 being positioned on the end surface of the piston that is remote from the end surface 58.

With the arrangement of the present invention, there is no need to provide apertures in the deflectable discs to allow for fluid flow during rebound and/or compression strokes of the suspension strut 10. Consequently, a better flow path is provided for the fluid during the damping action of the suspension strut 10. Further, the combination of the various features provides an overall improvement in the operation of the suspension strut over previously known designs.

## Claims

1. A suspension strut (10) comprising a tube (14) substantially closed at both ends (24,26) and containing fluid; a piston (42) slidably mounted in the tube and making a sealing fit therewith, the piston separating a compression chamber (38) and a rebound chamber (36) within the tube; a piston rod (18) attached to the piston, having a longitudinal axis (L), and extending through the rebound chamber and out of one end (26) of the tube; a compression stoke valve (64) comprising one or more deflectable discs (80,82) mounted on the piston on the rebound chamber side thereof and engagable with a first surface (58) of the piston; a rebound stroke valve (66) comprising one or more deflectable discs (68,70) mounted on the piston on the compression chamber side thereof and engagable with a second surface (52) of the piston; a compression flow passage (60) extending through the piston from a position inside the outer peripheral edge of the deflectable disc or discs of the compression stroke valve to a position outside the outer peripheral edge of the deflectable disc or discs of the rebound stroke valve in a direction substantially parallel to the longitudinal axis of the piston rod; and a rebound flow passage (62) extending through the piston from a position inside the outer peripheral edge of the deflectable disc or discs of the rebound stroke valve to a position outside the outer peripheral edge of the deflectable disc or discs of the compression stroke valve and at an angle to the longitudinal axis of the piston rod; characterised in that each of the first surface (58) and the second surface (52) of the piston (42) is surrounded by an upstanding wall means (57,48).

2. A suspension strut as claimed in Claim 1 comprising a plurality of rebound flow passages (62).

3. A suspension strut as claimed in Claim 2, wherein the rebound flow passages (62) open into an annular channel (54) formed in the piston (16) adjacent the rebound stroke valve (66), the deflectable disc or discs (68,70) of the rebound stroke valve covering the annular channel.

4. A suspension strut as claimed in Claim 3, wherein the rebound stroke valve (66) further comprises an orifice disc (68) positioned between the deflectable disc or discs (70) of the rebound stroke valve and the adjacent annular channel (54), the orifice disc having one or more slots (76) in its outer peripheral edge (78) to allow restricted flow of fluid between the compression chamber (38) and the annular channel.

5. A suspension strut as claimed in any one of Claims 1 to 4 comprising a plurality of compression flow passages (60).

6. A suspension strut as claimed in Claim 5, wherein the compression flow passages (60) open into an annular channel (56) formed in the piston (16) adjacent the compression stroke valve (64), the deflectable disc or discs (80,82) of the compression stroke valve covering the annular channel adjacent the compression stroke valve.

7. A suspension strut as claimed in Claim 6, wherein the compression stroke valve (64) further comprises an orifice disc (80) positioned between the deflectable disc or discs (82) of the compression stroke valve and the adjacent annular channel (56), the orifice disc having one or more slots in its outer peripheral edge to allow restricted flow of fluid between the rebound chamber (36) and the annular channel adjacent the compression stroke valve.

8. A suspension strut as claimed in Claim 6 or Claim 7, wherein a ridge (92) is formed in the annular channel (56) in the piston (16) adjacent the compression stroke valve (64).

9. A suspension strut as claimed in any one of Claims 1 to 8, wherein the compression stroke valve (64) comprises a convex surface to restrict deflection of the deflectable discs (80,82) of the compression stroke valve.

10. A suspension strut as claimed in any one of Claims 1 to 9, wherein the rebound stroke valve (66) comprises a convex surface (77) to restrict deflection of the deflectable discs (68,70) of the rebound stroke valve.

## Patentansprüche

1. Aufhängungsfederbein (10), umfassend ein Rohr (14), das an beiden Enden (24, 26) im wesentlichen verschlossen ist und Fluid enthält, einen Kolben (42), der verschiebbar in dem Rohr angebracht ist und einen Schiebesitz mit diesem herstellt, wobei der Kolben eine Verdichtungskammer (38) und eine Rückstellkammer (36) innerhalb des Rohres trennt, eine Kolbenstange (18), die an dem Kolben angebracht ist und eine Längsachse (L) aufweist und sich durch die Rückstellkammer und aus einem Ende (26) des Rohres heraus erstreckt, ein Verdichtungshubventil (64), das eine oder mehrere biegbare Scheiben (80, 82) umfaßt, die an dem Kolben auf dessen Rückstellkammerseite angebracht sind und mit einer ersten Oberfläche (58) des Kolbens in Eingriff treten können, ein Rückstellhubventil (66), das eine oder mehrere biegbare Scheiben (68, 70) umfaßt, die an dem Kolben auf dessen Verdichtungskammerseite angebracht sind und mit einer zweiten Oberfläche (52) des Kolbens in Eingriff treten können, einen Verdichtungsströmungsdurchgang (60), der sich durch den Kolben von einer Position innerhalb des äußeren Umfangsrandes der biegbaren Scheibe oder Scheiben des Verdichtungshubventils in eine Position außerhalb des äußeren Umfangsrandes der biegbaren Scheibe oder Scheiben des Rückstellhubventils in einer Richtung im wesentlichen parallel zur Längsachse der Kolbenstange erstreckt, und einen Rückstellströmungsdurchgang (62), der sich durch den Kolben von einer Position innerhalb des äußeren Umfangsrandes der biegbaren Scheibe oder Scheiben des Rückstellhubventils in eine Position außerhalb des äußeren Umfangsrandes der biegbaren Scheibe oder Scheiben des Verdichtungshubventils und unter einem Winkel zur Längsachse der Kolbenstange erstreckt, dadurch gekennzeichnet, daß jede von der ersten Oberfläche (58) und der zweiten Oberfläche (52) des Kolbens (42) von einem aufrechten Wandmittel (57, 48) umgeben ist.

2. Aufhängungsfederbein nach Anspruch 1, das mehrere Rückstellströmungsdurchgänge (62) umfaßt.

3. Aufhängungsfederbein nach Anspruch 2, bei dem die Rückstellströmungsdurchgänge (62) sich in einen Ringkanal (54) öffnen, der in dem Kolben (16) benachbart zu dem Rückstellhubventil (66) gebildet ist, wobei die biegbare Scheibe oder Scheiben (68, 70) des Rückstellhubventils den Ringkanal bedecken.

4. Aufhängungsfederbein nach Anspruch 3, bei dem das Rückstellhubventil (66) ferner eine Lochscheibe (68) umfaßt, die zwischen der biegbaren Scheibe oder Scheiben (70) des Rückstellhubventils und dem benachbarten Ringkanal (54) angeordnet ist, wobei die Lochscheibe einen oder mehrere Schlitze (76) in ihrem äußeren Umfangsrand (78) aufweist, um eine begrenzte Strömung von Fluid zwischen der Verdichtungskammer (38) und dem Ringkanal zu gestatten.

5. Aufhängungsfederbein nach einem der Ansprüche 1 bis 4, das mehrere Verdichtungsströmungsdurchgänge (60) umfaßt.

6. Aufhängungsfederbein nach Anspruch 5, bei dem die Verdichtungsströmungsdurchgänge (60) sich in einen Ringkanal (56) öffnen, der in dem Kolben (16) benachbart zu dem Verdichtungshubventil (64) gebildet ist, wobei die biegbare Scheibe oder Scheiben (80, 82) des Verdichtungshubventils den Ringkanal benachbart zu dem Verdichtungshubventil bedeckt.

7. Aufhängungsfederbein nach Anspruch 6, bei dem das Verdichtungshubventil (64) ferner eine Lochscheibe (80) umfaßt, die zwischen der biegbaren Scheibe oder Scheiben (82) des Verdichtungshubventils und dem benachbarten Ringkanal (56) angeordnet ist, wobei die Lochscheibe einen oder mehrere Schlitze in ihrem äußeren Umfangsrand aufweist, um eine begrenzte Strömung von Fluid zwischen der Rückstellkammer (36) und dem Ringkanal benachbart zu dem Verdichtungshubventil zu gestatten.

8. Aufhängungsfederbein nach Anspruch 6 oder Anspruch 7, bei dem ein Steg (92) in dem Ringkanal (56) in dem Kolben (16) benachbart zu dem Verdichtungshubventil (64) gebildet ist.

9. Aufhängungsfederbein nach einem der Ansprüche 1 bis 8, bei dem das Verdichtungshubventil (64) eine konvexe Oberfläche umfaßt, um die Biegung der biegbaren Scheiben (80, 82) des Verdichtungshubventils zu begrenzen.

10. Aufhängungsfederbein nach einem der Ansprüche 1 bis 9, bei dem das Rückstellhubventil (66) eine konvexe Oberfläche (77) umfaßt, um die Biegung der biegbaren Scheiben (68, 70) des Rückstellhubventils zu begrenzen.

## Revendications

1. Jambe de suspension (10), comprenant un tube (14) en grande partie fermé aux deux extrémités (24, 26) et contenant un fluide; un piston (42) monté de manière à pouvoir coulisser dans le tube et formant un ajustement hermétique avec celui-ci, le piston séparant une chambre de compression (38) d'une chambre de rebond (36) à l'intérieur du tube; une tige de piston (18) fixée au piston, possédant un axe longitudinal (L) et s'étendant au travers de la chambre de rebond et ressortant à une extrémité (26) du tube; une soupape de course de compression (64) comprenant un ou plusieurs disques déformables (80, 82) montés sur le côté du piston orienté vers la chambre de rebond et pouvant venir en prise avec une première surface (58) du piston; une soupape de course de rebond (66) comprenant un ou plusieurs disques déformables (68, 70) montés sur le côté du piston orienté vers la chambre de compression de celui-ci et venant en prise avec une deuxième surface (52) du piston; un passage d'écoulement par compression (60) s'étendant au travers du piston d'une position située à l'intérieur du pourtour externe du ou des disques déformables de la soupape de course de compression à une position située à l'extérieur du pourtour externe du ou des disques déformables de la soupape de course de rebond dans un sens pratiquement parallèle à l'axe longitudinal de la tige de piston; un passage d'écoulement par rebond (62) s'étendant au travers du piston d'une position située à l'intérieur du pourtour externe du ou des disques déformables de la soupape de course de rebond à une position située à l'extérieur du pourtour externe du ou des disques déformables de la soupape de course de compression et en oblique par rapport à l'axe longitudinal de la tige de piston, caractérisé en ce que la première surface (58) et la deuxième surface (52) du piston (42) sont chacune entourées par un moyen formant paroi érigé vers le haut (57, 48).

2. Jambe de suspension suivant la revendication 1, comprenant une pluralité de passages d'écoulement par rebond (62).

3. Jambe de suspension suivant la revendication 2, dans laquelle les passages d'écoulement par rebond (62) s'ouvrent dans un canal annulaire (54) formé dans le piston (16) et adjacent à la soupape de course de rebond (66), le ou les disques déformables (68, 70) de la soupape de course de rebond couvrant le canal annulaire.

4. Jambe de suspension suivant la revendication 3, dans laquelle la soupape de course de rebond (66) comprend en outre un disque à orifices (68) positionné entre le ou les disques déformables (70) de la soupape de course de rebond et le canal annulaire adjacent (54), le disque à orifices comportant une ou plusieurs fentes (76) dans son pourtour externe (78) afin de permettre un écoulement restreint du fluide entre la chambre de compression (38) et le canal annulaire.

5. Jambe de suspension suivant l'une quelconque des revendications 1 à 4, comprenant une pluralité de passages d'écoulement par compression (60).

6. Jambe de suspension suivant la revendication 5, dans laquelle les passages d'écoulement par compression (60) s'ouvrent dans un canal annulaire (56) formé dans le piston (16) et adjacent à la soupape de course de compression (64), le ou les disques déformables (80, 82) de la soupape de course de compression couvrant le canal annulaire adjacent à la soupape de course de compression.

7. Jambe de suspension suivant la revendication 6, dans laquelle la soupape de course de compression (64) comprend en outre un disque à orifices (80) positionné entre le ou les disques déformables (82) de la soupape de course de compression et le canal annulaire adjacent (56), le disque à orifices comportant une ou plusieurs fentes dans son pourtour externe afin de permettre un écoulement restreint du fluide entre la chambre de rebond (36) et le canal annulaire adjacent à la soupape de course de compression.

8. Jambe de suspension suivant la revendication 6 ou la revendication 7, dans laquelle un rebord (92) est formé dans le canal annulaire (56) du piston (16) adjacent à la soupape de course de compression (64).

9. Jambe de suspension suivant l'une quelconque des revendications 1 à 8, dans laquelle la soupape de course de compression (64) comprend une surface convexe pour restreindre la déformation des disques déformables (80, 82) de la soupape de course de compression.

10. Jambe de suspension suivant l'une quelconque des revendications 1 à 9, dans laquelle la soupape de course de rebond (66) comprend une surface convexe (77) pour restreindre la déformation des disques déformables (68, 70) de la soupape de course de rebond.
